Europäisches Patentamt

European Patent Office

Office européen des brevets

(19)

(11) Publication number: **0 083 946**
**B1**

(12) **EUROPEAN PATENT SPECIFICATION**

(45) Date of publication of patent specification: **20.11.86**

(51) Int. Cl.⁴: **C 08 F 279/04, C 08 F 285/00**

(21) Application number: **83100181.3**

(22) Date of filing: **11.01.83**

(54) Process for producing thermoplastic resin.

(30) Priority: **12.01.82 JP 3769/82**

(43) Date of publication of application:
**20.07.83 Bulletin 83/29**

(45) Publication of the grant of the patent:
**20.11.86 Bulletin 86/47**

(84) Designated Contracting States:
**BE DE FR GB IT NL**

(56) References cited:
**GB-A-1 062 995**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Matsumoto, Sigemi**
**329, Nagao, Amida-cho**
**Takasago-shi Hyogo-ken (JP)**
Inventor: **Nagoshi, Fumiya**
**9-36, 9-chome, Nishimaiko**
**Tarumi-ku Kobe-shi Hyogo-ken (JP)**

(74) Representative: **Vossius & Partner**
**Siebertstrasse 4 P.O. Box 86 07 67**
**D-8000 München 86 (DE)**

Courier Press, Leamington Spa, England.

EP 0 083 946 B1

**Description**

The present invention relates to a process for polymerizing α-methylstyrene, acrylonitrile, styrene, and copolymerizable vinyl monomers in the presence of a diene type synthetic rubber.

Heretofore, there have been proposed several methods for polymerizing monomers composed mainly of α-methylstyrene, acrylonitrile, and styrene in the presence of diene type synthetic rubber. These conventional methods, however, suffer from the disadvantages that the resulting copolymer does not have adequate impact resistance when it contains a large amount of α-methylstyrene, and that it does not show satisfactory heat distortion resistance when it contains a small amount of α-methylstyrene. In order to overcome these disadvantages, there was proposed a new process in Japanese Patent Publication No. 14936/1969. However, the product of this process is still insufficient in heat distortion resistance when the content of α-methylstyrene is less than 50 parts by weight.

A process for graft polymerizing α-methylstyrene, acrylonitrile and styrene and synthetic diene rubber which is known from GB—A—1,062,995 is characterized in that, in a first stage, a monomer mixture containing acrylonitrile and styrene, or these and not more than 30% α-methylstyrene based on the weight of the first-stage addition-monomer mixture, is continuously added to a latex of synthetic diene rubber for graft polymerization and in that, in a second stage, after the said polymerization is substantially complete a monomer mixture containing α-methylstyrene and acrylonitrile or these and not more than 30% of styrene based on the weight of the second-stage addition-monomer mixture is continuously added for graft polymerization, the amount of the said first-stage addition-monomer mixture being 1/9 to 6/9 of the weight of the second-stage addition-monomer mixture.

In order to overcome the above-mentioned disadvantages, the present inventors carried out a series of researches which led to the finding that it is possible to obtain a thermoplastic resin which offers high impact resistance, high heat distortion resistance and low discoloration by heat, through a process in which a monomer mixture composed mainly of acrylonitrile and styrene is subjected to polymerization in the presence of diene type synthetic resin, and subsequently a monomer mixture composed mainly of α-methylstyrene is added to the polymerization system, and finally a monomer mixture composed mainly of acrylonitrile is added little by little so that the polymerization is substantially completed.

It is an object of this invention to provide a process for producing in an industrially advantageous manner a thermoplastic resin which is outstanding in impact resistance and heat distortion resistance and is discolored only little by the heat to which the resin is exposed during and after molding.

This invention refers to a process for producing a thermoplastic resin which is outstanding in impact resistance and heat distortion resistance and is discolored only, little by heat, which process is characterized in that in the presence of a diene type synthetic rubber, 2 to 40 parts by weight of a monomer mixture (A) composed of acrylonitrile and styrene, the ratio of acrylonitrile to styrene being 10—40/90—60 by weight, with less than 30% of (A) optionally being other vinyl monomers, are polymerized, 50 to 90 parts by weight of α-methylstyrene monomer or a monomer mixture (B) containing more than 80 wt% of α-methylstyrene are added and then acrylonitrile monomer of a monomer mixture (C) containing more than 70 weight% of acrylonitrile is added continuously or stepwise, so that the monomer concentration ratio of α-methylstyrene to acrylonitrile in the polymerization zone is greater than 90/10, preferably 95/5 by weight until the polymerization conversion reaches 40%, the ratio of total α-methylstyrene to total acrylonitrile, both contained in the monomers or monomer mixtures (B) and (C), being 95—65/5—35 by weight, whereby 95 to 70 parts by weight of the monomers are polymerized in the presence of 5 to 30 parts by weight of a diene type synthetic rubber.

According to the process of this invention for polymerizing 95 to 70 parts by weight of α-methylstyrene, acrylonitrile, styrene, and, if required, other copolymerizable monomers in the presence of 5 to 30 parts by weight of a diene type synthetic rubber, a monomer mixture (A) containing mainly acrylonitrile and styrene, a monomer mixture (B) containing mainly α-methylstyrene, and a monomer mixture (C) containing mainly acrylonitrile are added in the order listed. These mixtures may be added in any manner, but the mixture (B) should be added after most of the mixture (A) has been polymerized, and then the mixture (C) should be added. The mixture (C) is added continuously or stepwise, so that the monomer concentration ratio of α-methylstyrene to acrylonitrile in the polymerization zone is greater than 90/10, preferably 95/5 by weight, until the polymerization conversion reaches 40%.

The quantities of the diene type synthetic rubber and monomer mixtures (A), (B) and (C) vary depending on the required physical properties of the resin.

The quantity of the diene type synthetic rubber should be 5 to 30 parts. If the quantity of diene type synthetic rubber is higher than 30 or lower than 5 parts, the resulting resin is inadequate in impact resistance and heat distortion resistance.

The quantity of the monomer mixture (A) should be 2 to 40 parts, preferably 2 to 20 parts, and it should be composed of acrylonitrile and styrene at a ratio of 10—40/90—60 by weight. Less than 30% of the acrylonitrile and styrene may be substituted with other vinyl monomers such as α-methylstyrene, chlorostyrene, methyl methacrylate, and methacrylonitrile. If the quantity of the monomer mixture (A) used is excessive, the resulting resin is poor in heat distortion resistance; and if the quantity is too small, the resulting resin is poor in impact resistance.

The monomer mixture (B) should be 50 to 90 parts and should preferably contain more than 80% of

α-methylstyrene. It should contain less than 20% of other vinyl monomers such as styrene, chlorostyrene, acrylonitrile, methacrylonitrile, and methyl methacrylate. If the quantity of the monomer mixture (B) is less than 50 parts, the resulting resin is poor in heat distortion resistance; and if the quantity exceeds 90 parts, the resulting resin is poor in impact resistance and the polymerization conversion is poor. In addition, if the content of other vinyl monomer in the monomer mixture (B) exceeds 20%, the resulting resin is poor in heat distortion resistance.

The monomer mixture (C) should contain more than 70% of acrylonitrile. The total α-methylstyrene and the total acrylonitrile both contained in the monomers or monomer mixtures (B) and (C) should be in the ratio of 95—65/5—35 by weight.

If the ratio is higher, the polymerization conversion is low and the resulting resin is poor in impact resistance; and if the ratio is lower, the resulting resin is discolored by heat. The monomer mixture (C) may contain vinyl monomers such as α-methylstyrene, styrene, chlorostyrene, methyl methacrylate, and methacrylonitrile.

According to the process of this invention, polymerization is accomplished preferably by emulsion polymerization in the usual way, but may be accomplished by any other type of polymerization. That is to say, the above-mentioned monomers are polymerized with the aid of a radical initiator in an aqueous dispersion in the presence of diene type synthetic rubber. Examples of radical initiators, include peroxides such as potassium persulfate, ammonium persulfate, and cumene hydroperoxide. In addition, polymerization accelerators, polymerization regulators, emulsifiers, etc. may be used as required. The polymerization temperature should preferably be 30 to 80°C. The latex obtained by polymerization may be treated in the usual way to separate the resin, and to the resin may be added stabilizers, plasticizers, and other processing aids and pigment.

The invention is now described in detail with reference to the following examples.

Examples 1 to 5 and Comparative Examples 1 to 3

The following components were charged in a reactor equipped with a stirrer. After removal of oxygen, the contents of the reactor were stirred with heating at 60°C under nitrogen stream. Then, synthetic rubber latex and the monomer mixtures (A), (B), and (C) as shown in Table 1 were charged in the order listed.

| | |
|---|---|
| Water | 250 parts |
| Sodium laurate | 2.5 |
| Sodium formaldehyde sulfoxylate | 0.4 |
| Disodium ethylenediaminetetraacetate | 0.01 |
| Ferrous sulfate | 0.0025 |

The sodium laurate and sodium formaldehyde sulfoxylate were added in parts during polymerization. After addition of an antioxidant, the resulting latex was coagulated, washed with water, filtered, dried, and pelletized. Using the pellets, the physical properties of the polymer were measured.

In a referential example, the monomer mixtures (A), (B) and (C) of the same compositions as in Example 1 were added all at once. The resulting polymer was found to have a polymerization conversion of 93%, an Izod impact strength of 10 kg-cm/cm, and a heat distortion temperature of 108°C.

Table 1 and the above-mentioned referential example indicate that the thermoplastic resins of this invention as represented by the examples are superior in impact resistance and heat distortion resistance and resistance to discoloration by heat.

# 0 083 946

TABLE 1

| | Example No. | | | | |
|---|---|---|---|---|---|
| | 1 | 2 | 3 | 4 | 5 |
| Diene type synthetic rubber | 18 | 10 | 15 | 20 | 18 |
| Monomer mixture (A) Acrylonitrile | 3 | 2 | 2.5 | 4 | 3 |
| Styrene | 6 | 4 | 5 | 8 | 6 |
| Methyl methacrylate | | | 1.5 | | 2 |
| Cumene hydroperoxide | 0.1 | 0.06 | 0.1 | 0.1 | 0.1 |
| t-Dodecyl mercaptan | | | | | |
| Monomer mixture (B) α-methylstyrene | 52 | 62 | 54 | 52 | 48 |
| Acrylonitrile | | | | 2 | 2 |
| Styrene | 4 | | | | |
| t-Dodecyl mercaptan | 0.2 | 0.2 | 0.2 | 0.2 | |
| Monomer mixture (C) α-methylstyrene | | 2 | | | 3 |
| Acrylonitrile | 17 | 20 | 18 | 16 | 16 |
| Styrene | | | | 1 | |
| Methyl methacrylate | | | 4 | | 2 |
| Cumene hydroperoxide | 0.3 | 0.3 | 0.3 | 0.3 | 0.3 |
| t-Dodecyl mercaptan | 0.15 | 0.2 | 0.2 | 0.15 | 0.4 |
| Final conversion (%) | 96 | 95 | 97 | 96 | 97 |
| Heat distortion temperature (°C) 18.6 kg/cm$^2$ load, ASTM-D-648 | 115 | 118 | 116 | 115 | 115 |
| Izod impact, with notch ASTM-D-256 (kg-cm/cm) | 18.0 | 9.6 | 15.1 | 19.6 | 18.3 |
| Discoloration by heat* | — | — | — | — | — |

4

TABLE 1 Continued

| | Unit: parts Comparative Example No. | | |
|---|---|---|---|
| | 1 | 2 | 3 |
| Diene type synthetic rubber | 18 | 18 | 20 |
| Monomer mixture (A) Acrylonitrile | 3 | 3 | 15 |
| Styrene | 6 | 6 | 30 |
| Methyl methacrylate | | | |
| Cumene hydroperoxide | 0.1 | 0.1 | 0.2 |
| t-Dodecyl mercaptan | | | 0.1 |
| Monomer mixture (B) α-methylstyrene | 40 | 41 | 25 |
| Acrylonitrile | | 10 | |
| Styrene | | | |
| t-Dodecyl mercaptan | 0.2 | 0.2 | |
| Monomer mixture (C) α-methylstyrene | | | |
| Acrylonitrile | 33 | 22 | 10 |
| Styrene | | | |
| Methyl methacrylate | | | |
| Cumene hydroperoxide | 0.8 | 0.3 | 0.2 |
| t-Dodecyl mercaptan | 0.2 | 0.2 | 0.4 |
| Final conversion (%) | 93 | 94 | 95 |
| Heat distortion temperature (°C) 18.6 kg/cm² load, ASTM-D-648 | 108 | 110 | 103 |
| Izod impact, with notch ASTM-D-256 (kg-cm/cm) | 11.9 | 12.8 | 16.9 |
| Discoloration by heat* | + | + | ± |

Note to Table 1
*Evaluated by observing molded test pieces for Izod impact testing.
−...Almost no discoloration
±...Slight discoloration
+...Discoloration

**Claim**

A process for producing a thermoplastic resin which is outstanding in impact resistance and heat distortion resistance and is discolored only little by heat, characterized in that in the presence of a diene type synthetic rubber, 2 to 40 parts by weight of a monomer mixture (A) composed of acrylonitrile and styrene, the ratio of acrylonitrole to styrene being 10—40/90—60 by weight, with less than 30% of (A)

**0 083 946**

optionally being other vinyl monomers, are polymerized, 50 to 90 parts by weight of α-methylstyrene monomer or a monomer mixture (B) containing more than 80 weight% of α-methylstyrene are added and then acrylonitrile monomer or a monomer mixture (C) containing more than 70 weight% of acrylonitrile is added continuously or stepwise, so that the monomer concentration ratio of α-methylstyrene to acrylonitrile in the polymerization zone is greater than 90/10, preferably 95/5 by weight until the polymerization conversion reaches 40%, the ratio of total α-methylstyrene to total acrylonitrile, both contained in the monomers or monomer mixtures (B) and (C), being 95—65/5—35 by weight, whereby 95 to 70 parts by weight of the monomers are polymerized in the presence of 5 to 30 parts by weight of a diene type synthetic rubber.

**Patentanspruch**

Verfahren zur Herstellung eines thermoplastischen Harzes, das hervorragende Schlagfestigkeit und Beständigkeit gegen Verformung in der Wärme aufweist und durch Wärme nur wenig verfärbt wird, dadurch gekennzeichnet, daß in Gegenwart eines synthetischen Dien-Kautschuks 2 bis 40 Gewichtsteile eines Monomerengemisches (A), das aus Acrylnitril und Styrol besteht, wobei das Gewichtsverhältnis von Acrylnitril zu Styrol 10 bis 40/90 bis 60 geträgt und wobei weniger als 30% von (A) gegebenenfalls andere Vinylmonomere sein können, polymerisiert werden, 50 bis 90 Gewichtsteile monomeres α-Methylstyrol oder ein Monomerengemisch (B), das mehr als 80 Gewichtsprozent α-Methylstyrol enthält, zugegeben werden, und dann monomeres Acrylnitril oder ein Monomerengemisch (C), das mehr als 70 Gewichtsprozent Acrylnitril enthält, kontinuierlich oder absatzweise zugegeben wird, so daß das Gewichtsverhältnis der Monomerenkonzentration von α-Methylstyrol zu Acrylnitril in der Polymerisationszone größer als 90/10, vorzugsweise 95/5 ist, bis die Polymerisationsumwandlung 40% erreicht, wobei das Gewichtsverhältnis des gesamten α-Methylstyrols zum gesamten Acrylnitril, beide enthalten in den Monomeren oder Monomerengemischen (B) und (C) 95 bis 65/5 bis 35 beträgt, und wobei 95 bis 70 Gewichtsteile der Monomeren in Gegenwart von 5 bis 30 Gewichtsteilen eines synthetischen Dien-Kautschuks polymerisiert werden.

**Revendication**

Procédé de production d'une résine thermoplastique qui présente une résistance au choc et une résistance à la déformation à la chaleur remarquable et qui n'est que faiblement décolorée par le chaleur, caractérisé en ce qu'en présence d'un caoutchouc synthétique du type diène, on polymérise 2 à 40 parties en poids d'un mélange monomère (A) formé d'acrylonitrile et de styrène, le rapport en poids de l'acrylonitrile au styrène étant de 10—40/90—60, avec moins de 30% par rapport à (A) d'autres monomères vinyliques éventuellement, on ajoute 50 à 90 parties en poids de monomère d'α-méthylstyrène ou d'un mélange monomère (B) contenant plus de 80% en poids d'α-méthylstyrène et ensuite on ajoute de façon continue ou graduellement un monomère d'acrylonitrile ou un mélange monomère (C) contenant plus de 70% en poids d'acrylonitrile, de telle sorte que le rapport pondéral de concentration des monomères d'α-méthylstyrène à l'acrylonitrile dans la zone de polymérisation soit supérieur à 90/10, de préférence de 95/5, jusqu'à ce que la conversion en produit de polymérisation atteigne 40%, le rapport pondéral de l'α-méthylstyrène total à l'acrylonitrile total, tous deux contenus dans les monomères ou mélanges monomères (B) et (C), étant de 95—65/5—35, de manière à ce que 95 à 70 parties en poids des monomères soient polymérisées en présence de 5 à 30 parties en poids d'un caoutchouc synthétique du type diène.

6